Europäisches Patentamt

European Patent Office

Office européen des brevets

(11) Veröffentlichungsnummer: **0 020 791**
B1

# EUROPÄISCHE PATENTSCHRIFT

(45) Veröffentlichungstag der Patentschrift:
25.09.85

(21) Anmeldenummer: **79101815.3**

(22) Anmeldetag: **08.06.79**

(51) Int. Cl.⁴: **F 02 B 33/42**

(54) **Stellgerät für eine Luftklappe in der Ladeluftleitung eines Verbrennungsmotors.**

(43) Veröffentlichungstag der Anmeldung:
07.01.81 Patentblatt 81/1

(45) Bekanntmachung des Hinweises auf die Patenterteilung:
25.09.85 Patentblatt 85/39

(84) Benannte Vertragsstaaten:
**BE CH DE FR GB IT NL SE**

(56) Entgegenhaltungen:
**CH - A - 378 595**
**CH - A - 399 077**
**DE - A - 2 631 257**
**FR - A - 2 337 257**
**US - A - 2 853 987**

(73) Patentinhaber: **Knorr-Bremse GmbH, Moosacher Strasse 80, D-8000 München 40 (DE)**
Patentinhaber: **BBC Aktiengesellschaft Brown, Boveri & Cie., Haselstrasse, CH-5401 Baden (CH)**

(72) Erfinder: **Fried, Reinhard, Stockackerstrasse 1, CH-5415 Nussbaumen (CH)**
Erfinder: **Heller, Rudolf, Troppauer Strasse 9, D-8000 München 45 (DE)**
Erfinder: **Hübner, Heimo, Dipl.-Ing., Giessübl 4, D-8919 Greifenberg (DE)**

## Beschreibung

Die Erfindung bezieht sich auf ein Stellgerät gemäss dem Oberbegriff des Anspruches 1.

Durch die US-A-2 853 987 ist ein Stellgerät der vorstehenden Art bekannt, bei dem die Öffnungsbewegung der Luftklappe am Ende der Startphase unmittelbar mittels Ladeluftdruck eingeleitet wird.

Nachteilig ist bei diesem Stellgerät, dass die Luftklappe im Leerlaufbetrieb des Motors selbsttätig wieder in Schliessstellung geht.

Durch die FR-A-2 337 257 bzw. DE-A-2 607 989 ist bereits ein Stellgerät der eingangs genannten Art bekannt, bei dem die Öffnungsbewegung der Luftklappe ebenfalls am Ende der Startphase eingeleitet wird, bei dem aber, anders als nach der vorgenannten US-A-2 853 987, die Luftklappe bis zum Abstellen des Motors geöffnet bleibt. Hierzu wird die Luftklappe von einem motoreigenen oder motorfremden Betätigungsmedium in der Öffnungsstellung gehalten. Beispielsweise handelt es sich um das Motoröl, dessen Druck bei laufendem Motor zur Beaufschlagung eines Kolbens dient, der die Luftklappe in der Öffnungsstellung hält. Zum Öffnen der Luftklappe wird jedoch der Öldruck erst freigegeben, wenn mittels einer prozesstypischen Steuergrösse, z. B. einem gewählten Ladeluftdruck des Ladegerätes, über ein Steuerorgan ein Schaltglied betätigt wird, durch das das unter Druck stehende Motoröl an den Kolben angeschlossen wird. Wird der Motor abgeschaltet und sinkt dementsprechend der Druck des Motoröls auf Null, dann geht das Schaltglied selbsttätig in seine Schliessstellung zurück und wird erst bei erneutem Motorlauf und Vorhandensein des gewählten Ladeluftdruckes wieder in die Öffnungsstellung gesteuert. Es wird also eine prozesstypische Steuergrösse gewählter Höhe, z. B. ein bestimmter Ladeluftdruck, dazu verwendet, eine von dieser Steuergrösse unabhängige, motorabhängige Betriebsgrösse, z. B. den Motoröldruck, zum Öffnen der Luftklappe freizugeben. Es hat sich jedoch als nachteilig herausgestellt, dass die Luftklappe nur von einer motorabhängigen Betriebsgrösse, wie dem Motoröldruck, sicher in Öffnungsstellung gehalten werden kann, weil hierzu konstruktive Eingriffe im Motorbereich erforderlich sind, die den sicheren Motorbetrieb beeinträchtigen können.

Ein weiterer Nachteil besteht darin, dass die Luftklappe auch bei einem defekten Ladegerät solange in ihrer Öffnungsstellung verbleibt, bis der Motor stillsteht und demgemäss die motorabhängige Betriebsgrösse zusammenbricht, so dass die Luftklappe durch Federkraft in ihre Schliessstellung gehen kann. Wird das Druckwellen-Auflagegerät z. B. über einen Antriebsriemen vom Motor angetrieben und reisst der Antriebsriemen, so kommt das Druckwellen-Ladegerät ausser Betrieb. Da die Luftklappe bei dem bekannten Stellgerät nach der FR-A-2 337 257 aber in der Öffnungsstellung verharrt, weil bei laufendem Motor die motorabhängige Betriebsgrösse erhalten bleibt, so wird der Motor durch die Abgase zum Ersticken gebracht, die über das vom Motor nicht mehr angetriebene Ladegerät ungehindert in die Ladeluftleitung und von dort zum Motor gelangen.

Aufgabe der Erfindung ist es daher, ein Stellgerät der eingangs genannten Art anzugeben, bei dem die Luftklappe auch unabhängig von einer motorgebundenen Betriebsgrösse (Öldruck des Motors) sicher in die Öffnungsstellung gebracht wird, ohne dass aber die vorstehend erläuterten Nachteile des Stellgerätes nach der US-A-2 853 987 vorhanden sind. Darüber hinaus soll auch, anders als bei der FR-A-2 337 257, sichergestellt sein, dass die Luftklappe selbsttätig in ihre Schliessstellung zurückgeht, wenn der Motor noch läuft, aber das Druckwellen-Aufladegerät defekt ist, insbesondere vom Motor nicht mehr angetrieben wird.

Die Aufgabe wird erfindungsgemäss mit den kennzeichnenden Merkmalen des Anspruches 1 gelöst.

Vorteilhafte Ausgestaltungen des erfindungsgemässen Stellgerätes folgen aus den Merkmalen der Unteransprüche.

In schematischen Zeichnungen sind Ausführungsbeispiele nach der Erfindung dargestellt. Hierin zeigt:

Figur 1 die Anordnung des Stellgerätes, z. B. an einem Dieselmotor,

Figur 2 einen Schnitt durch das Stellgerät in Fig. 1 nach den Linien II–II,

Fig. 3 einen Schnitt nach den Linien III–III in Fig. 2 und

Fig. 4–9 Schnitte entsprechend Fig. 2 durch Ausführungsbeispiele von Stellgeräten mit den zugehörigen Steuerungseinrichtungen.

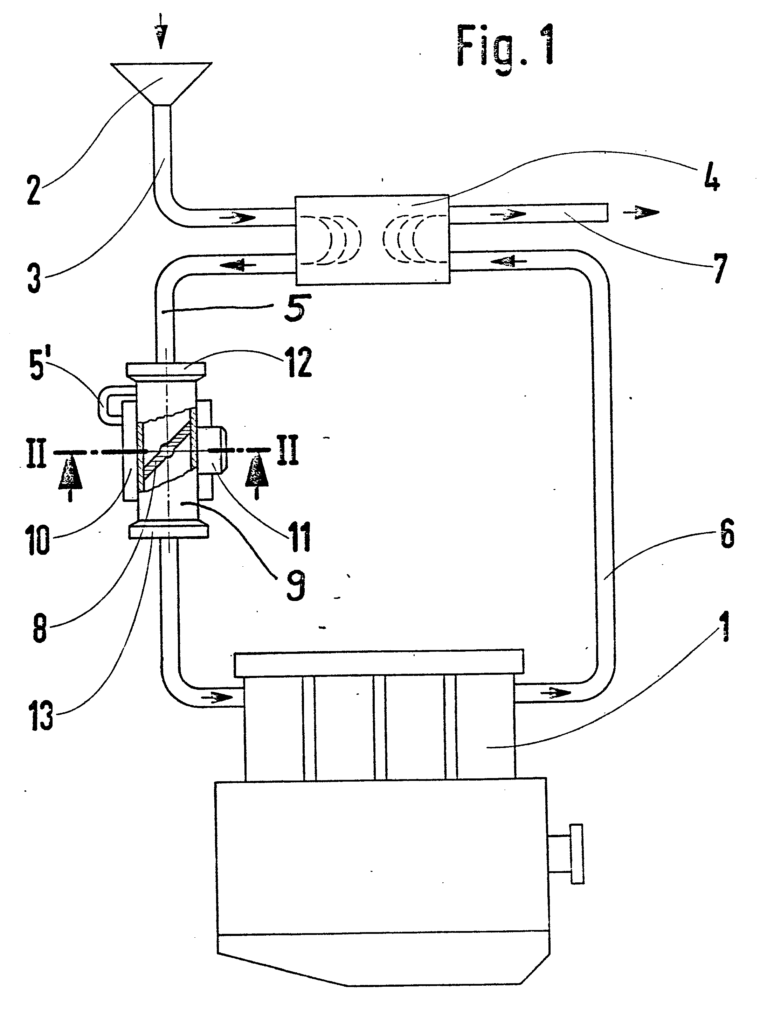

In Fig. 1 ist ein nicht näher dargestellter Dieselmotor mit 1 bezeichnet. Von einem Ansaugfilter 2 führt eine Ansaugleitung 3 zu einem Aufladegerät 4, das einerseits über eine Ladeluftleitung 5 und andererseits über eine Abgasleitung 6 mit dem Motor 1 verbunden ist. Durch eine Leitung 7 können die Abgase vom Aufladegerät 4 zur Atmosphäre abströmen. In die Ladeluftleitung 5 ist eine steuerbare Luftklappe 8 eingeordnet, die sich in einem Gehäuseabschnitt 10 zur Aufnahme eines Stellgerätes für die Luftklappe 8 angrenzt. Der Gehäuseabschnitt 10 ist zur Betätigung des Stellgerätes an die Luftleitung 5' angeschlossen, die von der Ladeluftleitung 5 abzweigt.

Das im nachfolgenden mehr im einzelnen beschriebene Stellgerät steuert die Luftklappe in eine Ruhe-(Sperr-) Stellung, in der der Luftdurchgang durch die Ladeluftleitung 5 gesperrt ist, und in eine Arbeits- (Öffnungs-) Stellung, in der die Ladeluftleitung 5 zum Durchgang von verdichteter Luft freigegeben ist.

Im Strömungsweg zum Motor 1 ist hinter der Luftklappe 8 ein Schnüffel- oder Bypassventil 11 angeordnet, über das bei geschlossener Luftklappe 8 ab einem bestimmten Unterdruck in dem zum Motor 1 führenden Abschnitt der Ladeluftleitung 5 atmosphärische Luft vom Motor 1 angesaugt wird.

Das Aufladegerät 4 ist ein Druckwellen-Aufladegerät, in welchem ohne strengdefinierter Trennung von Abgas und Aufladeluft die in ersterem enthaltene Auspuffenergie zur Kompression der letzteren ausgenützt wird. Der hierzu erforderliche mechanische Antrieb des Aufladegerätes 4 ist in Fig. 1 nicht dargestellt.

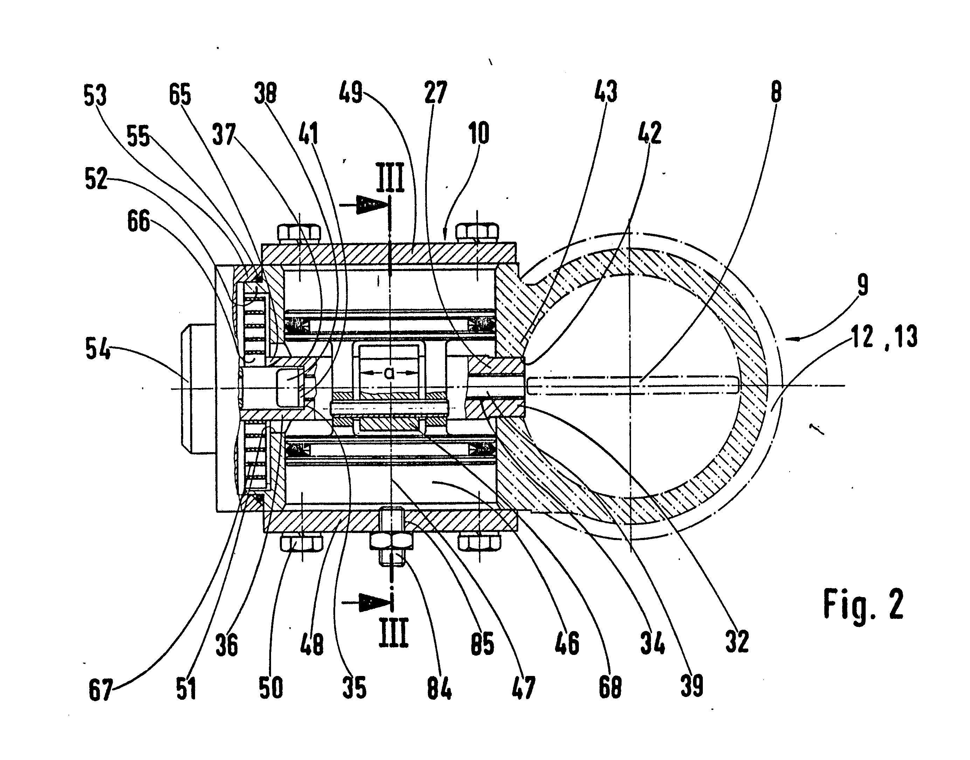

Fig. 2 zeigt einen Querschnitt durch die beiden eine Gehäuseeinheit bildenden Gehäuseabschnitte 9 und 10 für die Luftklappe 8 und das Stellgerät. Es ist klar, dass die beiden Gehäuseabschnitte auch aus getrennten Gehäusen bestehen können, die miteinander verflanscht sind.

Der Gehäuseabschnitt 9 besteht aus einem Rohrabschnitt, der mit gegenüberliegenden Flanschen 12, 13 (Fig. 1) an die Ladeluftleitung 5 angeschlossen ist.

Zum Verschwenken der Luftklappe 8 ist diese an das Ende 32 einer Welle 27 angeschlossen.

Die zentrale Bohrung 34 in der Welle 27 ist zur Bildung einer inneren Schulter 35 am anderen Ende 36 der Welle 27 zu einer Bohrung 37 erweitert, in die der Kopf 38 eines Bolzens greift, dessen Schaft 39 sich durch die Bohrung 34 erstreckt und mit der Luftklappe verspannt ist. Der Bolzenkopf 38 stützt sich dabei unter Zwischenlage einer geschlitzten Ringscheibe 41 an der inneren Schulter 35 ab.

Die Welle 27 ist in einer Bohrung 42 in einer Gehäusetrennwand 43 zwischen dem die Luftklappe 8 aufnehmenden Gehäuseabschnitt 9 und dem das Stellgerät für die Luftklappe umschliessenden Gehäuseabschnitt 10 drehbar gelagert.

Die Welle 27 durchragt den zylindrischen Innenraum 46 des Gehäuseabschnittes 10 quer, wobei die Wellenachse 39 auf einem Durchmesser in der mittigen radialen Ebene des Innenraumes 46 zu liegen kommt, dessen Achse 47 damit senkrecht auf der Wellenachse 39 steht. Der zylindrische Innenraum 46 ist an seinen beiden Stirnseiten durch zwei Gehäusedeckel 48 und 49 verschlossen. Hierzu dienen Deckelschrauben 50, die durch nicht dargestellte Löcher in den Deckeln an ihren Ecken radial ausserhalb des Innenraumes 46 in Gewindelöcher in Gehäusewandungen eingreifen.

Der Gehäuseabschnitt 10 besitzt schliesslich eine seitliche, zur Wellenachse zentrierte Öffnung 51, die von dem Wellenende 36 mit Spiel durchragt ist. An der Aussenseite des Gehäuseabschnittes 10 befindet sich mit radialem Abstand von der Öffnung 51 ein axial vorspringender ringförmiger Gehäuseansatz 52, der von dem seitlichen Rand 53 eines Deckels 54 übergriffen wird. Zum luftdichten Abschluss des Innenraumes 46 ist zwischen dem Deckelrand 53 und dem Gehäuseansatz 52 eine Dichtung 55 vorhanden.

Das Wellenende 36 ist zum Eingriff des inneren Endes 66 einer schneckenförmig aufgewickelten Metallfeder 67 mit einem axialen Schlitz 65 versehen. Das äussere Ende der Metallfeder 67 ist am Gehäuseansatz 52 festgehalten.

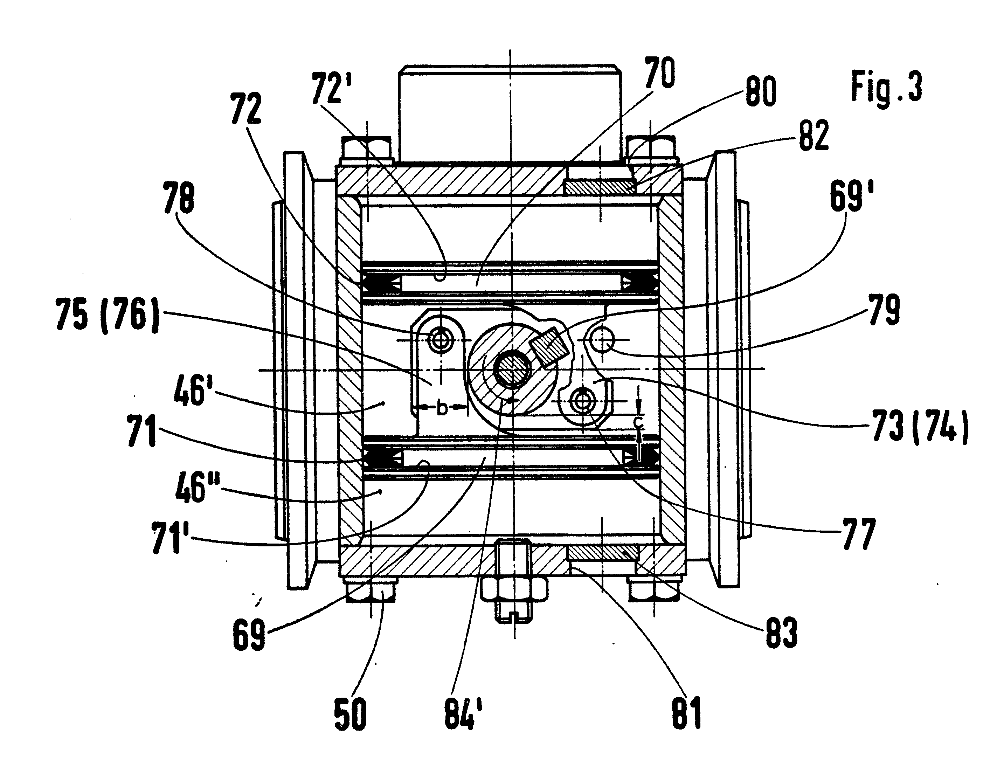

Auf der Welle 27 ist mittig im zylindrischen Innenraum 46 des Gehäuseabschnittes 10 ein hülsenartiger Kupplungskörper 68 der Tiefe a durch eine in eine Wellen- und eine Hülsennut eingreifende Passfeder 69′ (Fig. 3) drehfest gehalten. Der im Querschnitt längliche Kupplungskörper 68 ist symmetrisch zu einer Ebene durch die Wellenachse beidseitig abgeflacht, so dass er in dieser Ebene eine Wandstärke b aufweist, die wesentlich grösser ist als die Wandstärke c in einer senkrecht hierzu verlaufenden Ebene durch die Wellenachse.

In dem Innenraum sind zwei gegenläufige Kolben 69 und 70 mit Ringdichtungen 71 und 72 in Nuten 71′ und 72′ verschieblich angeordnet. An den Kolben befinden sich jeweils zwei im wesentlichen axial vorspringende parallele Ansätze, 73, 74 und 75, 76, die exzentrisch an den Kolben 69, 70 mit einem solchen Abstand fest angreifen, dass die axial gegenüberliegenden länglichen Abschnitte des Kupplungskörpers 68 mit Spiel zwischen die parallelen Ansätze 73, 74 und 75, 76 greifen. Die im wesentlichen gleich ausgebildeten Kolben 69 und 70 sind in dem zylindrischen Innenraum 46 derart angeordnet, dass die Ansätze 73, 74 und 75, 76 aufeinander zugerichtet sind und an diametral gegenüberliegenden Punkten durch parallel zur Welle 27 verlaufende Stifte 77 und 78 mit dem länglichen Körper 68 gelenkig verbunden sind.

In Fig. 2 ist nur der eine Stift 77 in Längsansicht zu sehen, der den Kupplungskörper 68 und die beiden parallelen Ansätze 73 und 74 an dem einen Kolben 70 durchdringt. In Fig. 3 sind beide Stifte 77 in Stirnansicht und jeweils nur einer der beiden Ansätze 73 und 75 an je einem der Kolben 70 und 71 zu erkennen.

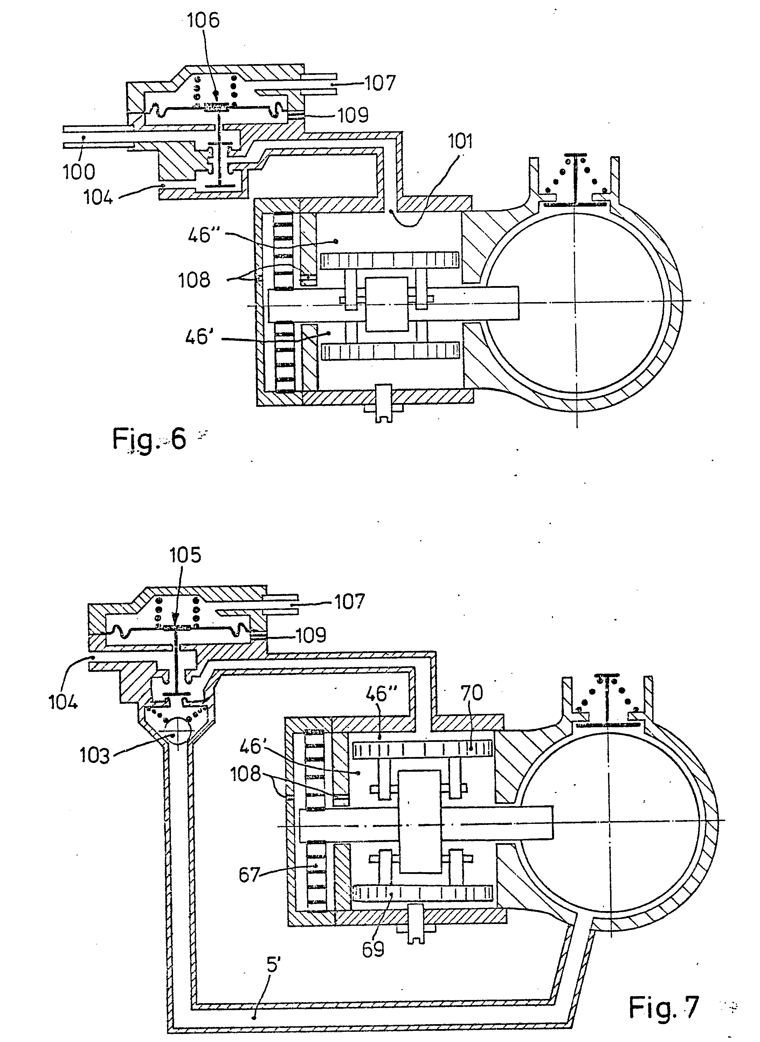

Im Gehäuseabschnitt 10 befindet sich eine Bohrung 79, die in den zylindrischen Innenraum 46 zwischen den beiden Kolben 70, 71 führt. Die Bohrung 79 schliesst an die Kammer für die Luftklappe 8 in Strömungsrichtung vor der Luftklappe an. In den beiden Gehäusedeckeln 48 und 49 befinden sich jeweils Öffnungen 80, 81, wovon eine ein Belüftungsloch der nicht vom Ladedruck beaufschlagten Kolbenoberseite ist, und durch einen Luftfilter 82 bzw. 83 gegen Verschmutzung des Innenraumes 46 abgeschlossen ist. Die andere Öffnung dient als Anschluss für eine Leitung, wie sie beispielsweise in Fig. 6 und 7 dargestellt ist. In dem Deckel 48 befindet sich noch eine Bohrung 85, in die eine Schraube 84 einschraubbar und in einer bestimmten Eindringtiefe in den zylindrischen Innenraum 46 festlegbar ist, um einen einstellbaren Hubbegrenzungsanschlag für die Kolben 69 und 70 zu haben.

Die Umfangsflächen der Kolben 69 und 70 sind leicht ballig oder kugelig ausgebildet, so dass sie sich bei ihren Bewegungen ohne Verklemmungen in dem zylindrischen Raum 46 um kleine Winkel schräg zur Kolbenachse einstellen können. Mit anderen Worten taumeln die Kolben 69 und 70 bei ihren gegenläufigen Bewegungen um ihre gemeinsame Achse, wobei die Welle 27 gedreht wird und die Stifte 77 und 78 auf Kreisbögen um die Wellenachse gedreht werden.

Die Dichtungsringe 71 und 72 bleiben bei der Taumelbewegung der Kolben 69, 70 dicht an der Zylinderinnenwand des Raumes 46 angedrückt. Hierzu weisen die Dichtungsringe an ihren Innenumfängen schwalbenschwanzförmige Profile auf, die Dichtungslippen bilden, welche nach Art von Rückschlagklappen an axial gegenüberliegenden Nutenwänden der Nuten 71', 72' anliegen. Auf diese Weise kann bei einer Druckbeaufschlagung der Kolben Druckluft hinter die Dichtungsringe 71 und 72 gelangen, wodurch sie ständig von der Druckluft radial nach aussen gedrückt werden. Es ist klar, dass die maximalen Schräglagen der Kolben 69 und 70 zu ihren Achsen so klein gewählt sind, dass ein Herausdrücken der Dichtungsringe 71 und 72 aus ihren Nuten 71' und 72' sicher vermieden wird.

Durch Einstellung der Eindringtiefe der Anschlagschraube 84 lassen sich – wie schon gesagt – leicht die Tiefe der Kolbenhübe und damit der Drehwinkel der Welle 27 bzw. der Klappwinkel der Luftklappe 8 festlegen.

Das erfindungsgemässe Stellgerät zur Bewegung der Luftklappe 8 arbeitet wie folgt:

Wird der Dieselmotor 1 zum Starten mittels eines Startermotors angedreht, so entsteht in der von der Luftklappe 8 zum Motor 1 führenden Ladeluftleitung 5 ein Unterdruck, da die Luftklappe 8 geschlossen und die Verbindung zum Ansaugfilter abgesperrt ist. Infolge des Unterdruckes wird das Schnüffelventil 11 geöffnet, so dass die zum Anlassen des Motors erforderliche Verbrennungsluft über das Schnüffelventil in die Ladeluftleitung gelangt.

Sobald die ersten Zündungen des Dieselmotors 1 erfolgen, stösst dieser stossartig mit Überdruck Abgase in die Abgasleitung 6 aus. Diese Abgase gelangen zum Aufladegerät 4 und beginnen den Druckwellenprozess in Tätigkeit zu setzen. In das Aufladegerät 4 kann infolge der geschlossenen Stellung der Luftklappe 8 trotz der im Aufladegerät 4 vorhandenen Verbindung von der Abgasleitung 6 zur Ladeluftleitung 5 in letztere kein Abgas eingesaugt werden, welches den gerade anspringenden Dieselmotor 1 rasch ersticken und zum Stillstand bringen würde. Das Abgas wird vielmehr durch die geschlossene Luftklappe vom Ladelufteingang des Dieselmotors 1 ferngehalten und durch die Leitung 7 ausgestossen. Durch das Ingangsetzen des Druckwellenprozesses mittels der Abgase wird mit durch den Luftfilter 2 angesaugter Frischluft im Abschnitt der Ladeluftleitung zwischen dem Luftfilter 2 und der Luftklappe 8 ein Druck aufgebaut, der durch die Zweigleitung 5' auch in den Innenraum 46 zwischen den Kolben 69 und 70 gelangt. Sobald in diesem Zwischenraum ein das Anspringen des Dieselmotors 1 anzeigender, bestimmter Überdruck von beispielsweise 0,2 bar erreicht ist, werden die beiden Kolben 69 und 70 aus der in Fig. 2 und 3 dargestellten Stellung entgegen der die Luftklappe 8 in ihrer Schliessstellung haltenden Schliesskraft der Metallfeder 67 axial auseinanderbewegt, wobei die Welle 27 in Öffnungsrichtung der Luftklappe 8 gedreht wird, wie es durch den Pfeil 84' in Fig. 3 angedeutet ist.

Es ist vorteilhaft, den zum Öffnen der Luftklappe 8 erforderlichen Überdruck derart zu bemessen, dass er erst bei einer die Leerlaufdrehzahl übersteigenden Drehzahl des Dieselmotors 1 vom Aufladegerät 4 geliefert werden kann. Hierdurch wird erreicht, dass, solange der noch kalte Dieselmotor 1 nach seinem Anspringen nur mit der Leerlaufdrehzahl läuft, das Stellgerät die Luftklappe 8 geschlossen hält und somit das Hochlaufen des Dieselmotors erleichtert.

Nach dem Öffnen der Luftklappe 8 wird diese durch eine der nachstehend beschriebenen Einrichtungen bei normalem Betrieb offen gehalten.

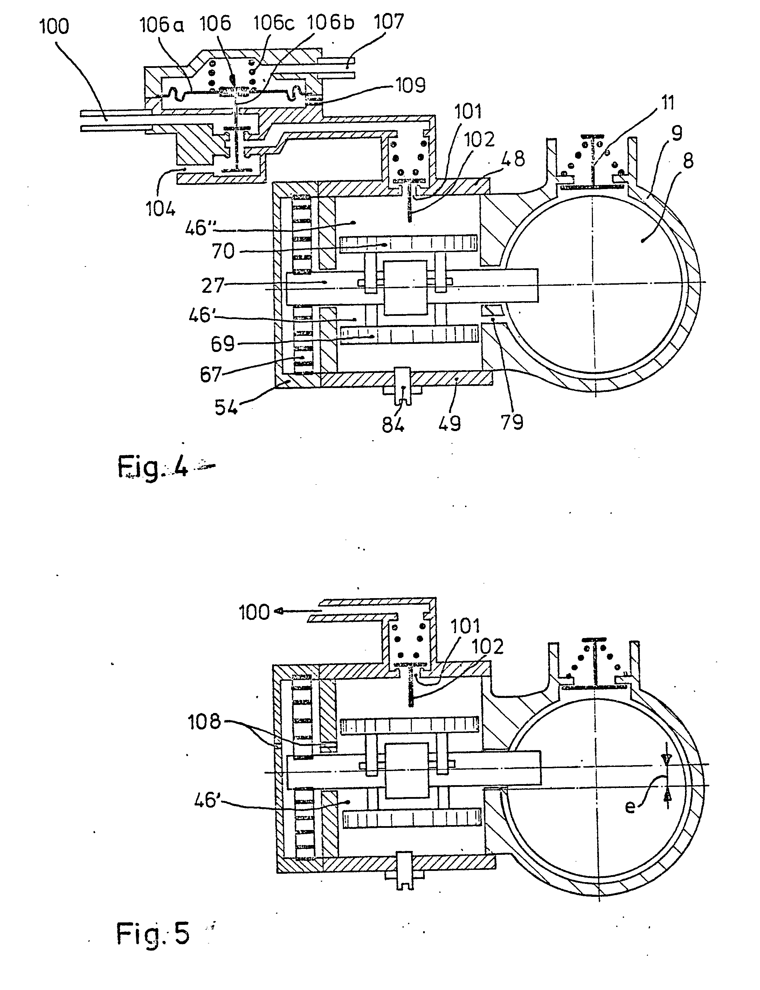

In den Fig. 4 bis 9 werden Ausführungsbeispiele gezeigt und im nachfolgenden beschrieben, die die Möglichkeit bieten, dass die Luftklappe nach dem Abschalten des Motors in jedem Fall geschlossen werden kann, da bei Wegfall des die Kolben beaufschlagenden Druckes die Rückstellung über die gespannte Feder erfolgt. Ferner kann die Klappe auch bei laufendem Motor ganz oder teilweise geschlossen werden, was beispielsweise wichtig ist bei einem eventuellen Ausfall des Laders, bei welchem Motorabgase in die Ladeluftleitung gelangen und den Motor ersticken könnten. In solchem Fall wird bei in der Regel geschlossener Klappe das Abgas gesperrt und Frischluft über das Bypassventil 11 vom Motor angesaugt.

Bei Verwendung einer normalen Feder ist die Klappenstellung proportional dem Ladeluftdruck, was unerwünscht ist, da die Klappe ständig in Bewegung wäre. Es bedarf zusätzlicher Mittel, um die Klappe während des Motorbetriebes dauernd in vollständig offener Stellung zu halten.

In den schematisch dargestellten Fig. 4 bis 9, in denen gleiche Teile mit denselben Bezugszeichen versehen sind wie in den Fig. 1 bis 3, sind diese zusätzlichen Mittel und verschiedene Arten der Kolbenbetätigung näher erläutert:

Alle Ausführungen sind mit geschlossener Klappe 8 und entsprechender Stellung der Kolben 69, 70 dargestellt. Hiervon unabhängig ist das in seiner Wirkungsweise erkennbare Bypassventil 11 der Einfachheit halber ebenfalls in Ruhestellung, d.h. geschlossen gezeigt.

Gemäss Fig. 4 wird – wie bereits in Fig. 3 in anderer Ansicht gezeigt – der Kolbeninnenraum 46' über die Bohrung 79 mit Druckluft aus dem stromaufwärts vor der Klappe 8 liegenden Teil der Ladeluftleitung 5 beaufschlagt, wodurch die Öffnungsbewegung der Klappe 8 eingeleitet wird. Bei der gegenläufigen Bewegung der Kolben 69, 70 hebt der Kolben 70 mit seiner Aussenseite ein im Deckel 48 angeordnetes, federbelastetes Ventil 102 an und gibt die Öffnung 101 frei. Dadurch wird der Kolbenaussenraum 46'' über ein Membranventil 106 und eine Unterdruckleitung 100 mit einer nicht gezeigten Vakuumquelle verbunden. Diese Vakuumquelle kann die Vakuumpumpe des Motorbremskraftverstärkers sein.

In Fig. 4 ist das Membranventil 106 in Ruhestellung, also bei abgestelltem Verbrennungsmotor gezeigt. Das über die federbelastete Membran 106a betätigte Ventil 106b hält eine in die Atmosphäre mündende Entlüftungsleitung 104 offen und die mit der Vakuumquelle verbundene Unterdruckleitung 100 geschlossen.

Während des Motorbetriebes wird über eine Luftleitung 107 die Membranoberseite mit Unterdruck aus der stromaufwärts des Aufladegerätes 4 angeordneten Saugleitung 3 beaufschlagt. Die Membranunterseite ist über die Bohrung 109 permanent entlüftet. Gegen die Wirkung der Feder 106c wird das an der Membran 106a befestigte Ventil 106b angehoben, verschliesst dabei die Entlüftung 104 und gibt die Unterdruckleitung 100 frei. Das Vakuum gelangt über das angehobene Ventil 102 in den Kolbenraum 46″ und unterstützt nun die Wirkung des den Kolbeninnenraum 46′ beaufschlagenden Druckes derart, dass unabhängig von diesem je nach Motorlast schwankenden Druck die Klappe 8 jederzeit voll geöffnet bleibt.

Tritt nun beispielsweise der oben besprochene Fall ein, dass wegen Ausfalls des Aufladegerätes 4 die Klappe 8 geschlossen werden muss, so läuft dieser Vorgang beim Stellgerät nach Fig. 4 (so wie bei den Geräten nach Fig. 5 bis Fig. 7) selbsttätig ab.

Fördert das Aufladegerät 4 keine Ladeluft in die Leitung 5, so wird auch keine Frischluft über die Leitung 3 (Fig. 1) angesaugt, d.h. in letzterer herrscht kein Unterdruck. Das Membranventil 106 wird also in die gezeigte Ruhestellung zurückkehren, d.h. die Vakuumzufuhr wird unterbrochen, der Kolbenraum 46″ wird entlüftet und die Rückstellkraft der Feder 67 schliesst die Klappe 8.

In Fig. 5 ist eine weitere Ausführung gezeigt, bei der wie in jener nach Fig. 4 die Anfangsbewegung der Klappe 8 durch Ladedruck gesteuert wird, während das Stellgerät im wesentlichen vakuumbetätigt ist und hierzu als Steuergrösse der Ansaugdruck vor dem Ladegerät 4 verwendet wird (nicht dargestellt in Fig. 5). Im Gegensatz dazu beaufschlagt jedoch der Ladedruck nicht den Kolbeninnenraum 46′, sondern leitet die Öffnungsbewegung durch direkte Druckbeaufschlagung der Klappe 8 ein. Hierzu ist die Klappe 8 exzentrisch gelagert, d.h. deren schwenkbare Lagerung ist in bezug auf die Klappenfläche um den Betrag e aussermittig angeordnet. Diese Aussermittigkeit wird derart gewählt, dass durch die unsymmetrische Beaufschlagung mit dem Ladedruck die Klappe 8 zumindest ausgeschwenkt und dadurch die Öffnungsbewegung eingeleitet wird, welche daran anschliessend, wie bei der Ausführung nach Fig. 4, vom Vakuumzug auf die Kolben 69, 70 unterstützt wird.

Die Ausführung weist gegenüber den bisherigen Beispielen den Vorteil auf, dass der Kolbeninnenraum 46′ und insbesondere die Dichtflächen keiner Verschmutzungsgefahr durch unsaubere Ladeluft ausgesetzt sind.

Eine weitere Vereinfachung zeigt Fig. 6. Ohne jeglichen Ladelufteinfluss wird bei dieser Ausführung der äussere Kolbenraum 46″ direkt mit Vakuum beaufschlagt, d.h. auf das die Öffnung 101 zunächst absperrende federbelastete Ventil 102 kann verzichtet werden. Diese Lösung ist überall dort angebracht, wo ein Motorbetrieb mit hohem Druck vor geschlossener Klappe 8 und daraus resultierender starker Erhitzung des Ladegerätes durch heisse Motorabgase möglich ist.

Ist dies nicht der Fall, so wird man auf eine Ausführung gemäss Fig. 4 oder Fig. 5 zurückgreifen. Bei diesen kann die Feder 67 so ausgelegt werden, dass bei ausgefallenem Lader ein möglicher hoher Abgasdruck in der Ladeluftleitung die Klappe teilweise zu öffnen vermag. Ungenügend zwar, um den Verbrennungsmotor zu ersticken, da es mit angesaugter Frischluft aus dem Bypassventil 11 vermischt wird, hingegen genügend, um eine Abgaszirkulation zu gestatten. Bei dieser Gangart wird die Drehzahl des Verbrennungsmotors absinken, der Abgasdruck fällt, die Klappe 8 schliesst vollständig und der Verbrennungsmotor läuft als Saugmotor weiter.

Fig. 7 zeigt eine Stellgerätsteuerung, bei der die Offenhaltung der Klappe 8 nur mit Hilfe von Ladeluft erfolgt. Über die Leitung 5′ gelangt Ladeluft über ein federbelastetes Rückschlagventil 103 in den äusseren Kolbenraum 46″. Im Gegensatz zu den bisher beschriebenen Ausführungen sind die Kolben 69, 70 nicht gegenläufig in bezug auf die Klappenöffnung, sondern laufen aufeinander zu. Aufgrund der Wirkungsweise des Rückschlagventils wird der grösste in der Ladeluftleitung auftretende Druck im Kolbenraum 46″ gespeichert und veranlasst die permanente Offenhaltung der Klappe 8 gegen die Rückstellkraft der entsprechend dimensionierten Feder 67. Zum Schliessen der Klappe muss der Kolbenraum entlüftet werden (104), was über ein federbelastetes Membranventil 105 selbsttätig geschieht, wenn der die Membran steuernde Unterdruck (107) aus der stromaufwärts des Aufladegerätes 4 angeordneten Saugleitung 3 ausfällt, beispielsweise bei Stillstand des Ladegerätes.

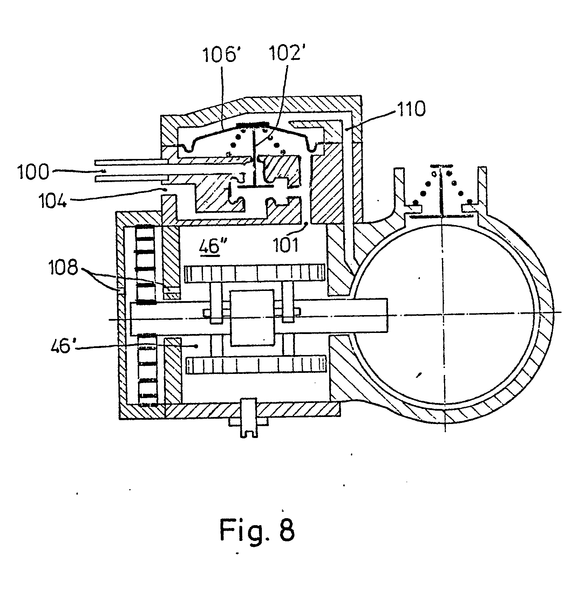

In Fig. 8 ist ein vakuumbetätigtes Stellgerät dargestellt, bei dem die Steuerung der Vakuumzufuhr im Gegensatz zu den Ausführungen gemäss Fig. 4, 5, 6 und 7 über ein mit Ladedruck aus der Ladeluftleitung 5 beaufschlagtes Membranventil geschieht. Die federbelastete Membran 106′ betätigt das doppeltwirkende Ventil 102′, das entweder die Entlüftungsleitung 104 oder die Unterdruckleitung 100 mit dem Kolbenraum 46″ verbindet. Das Membranventil ist so ausgebildet, dass bei offener Vakuumzufuhr der Unterdruck ebenfalls die Membranunterseite beaufschlagt und so die Wirkung des über die Leitung 110 herangeführten Ladedruckes auf die Membranoberseite unterstützt. Bricht der Ladedruck zusammen, so reicht der Vakuumzug auf die Membranunterseite aus, um die Entlüftungsleitung geschlossen zu halten. Erst bei Ausserbetriebsetzung der Vakuumquelle bei Abstellen des Motors entweicht der Unterdruck aus dem Kolbenraum 46′ und die Klappe 8 schliesst. Bei dieser Variante ist ein Motorbetrieb bei geschlossener Klappe bis zu einem bestimmten Steuerdruck, d.h. Ladeluftdruck möglich.

Bei den Stellgeräten nach Fig. 5, 6, 7 und 8 ist der Kolbeninnenraum 46′ über eine Entlüftung 108 permanent mit der Atmosphäre verbunden.

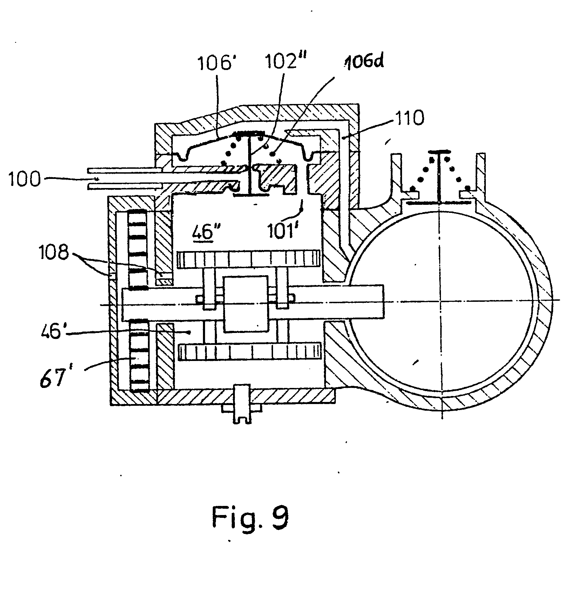

In Fig. 9 ist ein weiteres vakuumbetätigtes Stellgerät dargestellt, bei dem die Steuerung der Vakuumzufuhr, wie bei der Ausführung nach Fig. 8, über ein mit Ladedruck beaufschlagtes Membranventil 106′ erfolgt. Im Unterschied zu der Ausführung nach Fig. 8 betätigt die federbelastete Membran 106' ein einfach wirkendes Ventil 102'', das die Unterdruckleitung 100, entweder vom Kolbenraum 46'' abschliesst, oder mit dem Kolbenraum 46'' verbindet.

Wird die Oberseite der Membran 106' über die Leitung 110 vom Ladeluftdruck beaufschlagt, dann öffnet das Ventil 102'' und schliesst dabei den Unterdruck in der Leitung 100 an den Kolbenraum 46'' an. Über die Leitung 101', die den Kolbenraum 46'' mit der Unterseite der Membran 106' verbindet, gelangt auch Unterdruck unter die Membran 106', wodurch, entsprechend wie beim Ausführungsbeispiel nach Fig. 8, die Wirkung des Ladedruckes auf die Oberseite der Membran 106' noch unterstützt wird. Bricht der Ladedruck zusammen, so reicht der Vakuumzug auf die Membranunterseite aus, um das Ventil 102'' entgegen der Kraft der Membranfeder 106d offen zu halten. Erst bei Ausserbetriebsetzung der Vakuumquelle beim Abstellen des Motors entweicht der Unterdruck aus dem Kolbenraum 46'' über das noch offengehaltene Ventil 102'' und die Klappe 8 geht in ihre Schliessstellung. Hierzu sind die Federn 106d und 67' unter der Membran 106' bzw. an der Klappenwelle 27 derart in ihren Stärken aufeinander abgestimmt, dass beim Entweichen des Unterdruckes aus dem Kolbenraum 46'' aufgrund der Kraft der Feder 67' die Kolben 69, 70 sich auseinanderbewegen und dabei die Klappe über die Welle in ihre Schliessstellung führen, bevor das Ventil 102'' durch die Feder 106d in seine Schliessstellung gezogen wird.

Das Ventil 102'' könnte zum Entweichen des Unterdruckes aus dem Kolbenraum 46'' auch durch den Ladeluftdruck oberhalb der Membran 106' kurzzeitig in Öffnungsstellung gehalten werden, wobei der Ladeluftdruck dann über ein nicht dargestelltes Drosselrückschlagventil in der Leitung 110 gegenüber dem Unterdruck verzögert abgebaut wird.

Es ist klar, dass die Erfindung nicht auf die gezeigten und beschriebenen Ausführungsbeispiele beschränkt ist. So können statt zweier Kolben auch nur ein Kolben verwendet werden.

Auch brauchen die Kolben 69 und 70 nicht notwendigerweise als Taumelkolben ausgebildet zu sein. So sind dem Fachmann aufwendigere Lösungen ohne weiteres an die Hand gegeben, in deren die Ansätze 73, 74 und 75, 76 an den Kolben gelenkig angreifen. Weiterhin kann statt der doppelten Ansätze an einem Kolben auch nur ein einzelner Ansatz an jedem Kolben vorhanden sein, der dann zur gelenkigen Verbindung mit dem Kupplungskörper 68 analog in einen radialen Schlitz des Kupplungskörpers 68 eingreift. Auch kann der Kupplungskörper 68 mit der Welle 27 einstückig verbunden sein.

Bezugszeichenliste

| 1 | Dieselmotor |
|---|---|
| 2 | Ansaugfilter |
| 3 | Ansaugleitung |
| 4 | Aufladegerät |
| 5 | Ladeluftleitung |
| 5' | Luftleitung von 5 zu 10 |
| 6 | Abgasleitung |
| 7 | Leitung zur Atmosphäre |
| 8 | Luftklappe in 5 |
| 9 | Gehäuseabschnitt für 8 |
| 10 | Gehäuseabschnitt für Stellgerät |
| 11 | Schnüffel- oder Bypassventil |
| 12, 13 | Flanschen für 9 |
| 27 | Welle für 8 |
| 32, 36 | Wellenenden |
| 34, 37 | Bohrung |
| 35 | Schulter |
| 38 | Bolzenkopf |
| 39 | Bolzenschaft Wellenachse |
| 41 | Ringscheibe |
| 42 | Bohrung |
| 43 | Gehäusetrennwand |
| 46 | zylindrischer Innenraum |
| 46' | innerer Kolbenraum |
| 46'' | äusserer Kolbenraum |
| 47 | Achse des Innenraumes |
| 48, 49 | Gehäusedeckel |
| 50 | Deckelschrauben |
| 51 | Öffnung |
| 52 | Gehäuseansatz |
| 53 | Deckelrand |
| 54 | Deckel |
| 55 | Dichtung |
| 65 | axialer Schlitz |
| 66 | Federende |
| 67, 67' | Metallfeder |
| 68 | Kupplungskörper |
| 69' | Passfeder |
| 69, 70 | Kolben |
| 71, 72 | Ringdichtungen |
| 71', 72' | Nuten |
| 73, 74, 75, 76 | axial vorspringende Ansätze |
| 77, 78 | Stifte |
| 79 | Bohrung |
| 80, 81 | Öffnungen |
| 82, 83 | Luftfilter |
| 84 | Schraube |
| 85 | Bohrung |
| 100 | Unterdruckleitung |
| 101 | Öffnung |
| 102 102' 102'' | federbelastetes Ventil |
| 103 | Rückschlagventil |
| 104 | Entlüftungsleitung |
| 105 | membranbetätigtes Ventil |
| 106 | Membranventil |
| 106a | Membran |
| 106b | Ventil |
| 106c | Feder |
| 106' | Membran |
| 107 | zweite Luftleitung |
| 108 | Entlüftung |
| 109 | Entlüftung |
| 110 | Leitung |

**Patentansprüche**

1. Stellgerät für eine Luftklappe in der Ladeluftleitung eines mittels eines Druckwellen-Aufladegerätes aufgeladenen Verbrennungsmotors, die sich während der Startphase des Verbrennungsmotors in ihrer Absperrstellung befindet, wobei der Motor die Verbrennungsluft über ein Bypassventil ansaugt und wobei die Öffnungsbewegung der Luftklappe am Ende der Startphase unmittelbar pneumatisch eingeleitet und nach dem Stillsetzen des Motors oder des Aufladegerätes mittels Federkraft in ihre Schliessstellung gebracht wird, dadurch gekennzeichnet, dass die Luftklappe (8) während aller Betriebsbedingungen des Aufladegerätes (4) offengehalten ist, wobei als Betätigungsmedium für das Stellgerät der Ladeluftdruck oder ein Servovakuum oder beides und zur Steuerung des Betätigungsmediums der Ladeluftdruck oder der Unterdruck aus der stromaufwärts des Aufladegerätes (4) angeordneten Saugleitung (3, 107) dient.

2. Stellgerät nach Anspruch 1, dadurch gekennzeichnet, dass die Luftklappe (8) zu ihrer schwenkbaren Lagerung in der Ladeluftleitung (5) an einer aus der Ladeluftleitung herausgeführten Welle (27) festgehalten ist, an die zum Drehen der Welle in die Schliessstellung der Luftklappe wenigstens eine Feder (67) angreift und die zum entgegengesetzten Drehen der Welle in die Öffnungsstellung der Luftklappe über ein Hebelgetriebe (68, 73, 74, 75, 76) mit wenigstens einem vom Ladeluftdruck und/oder von dem Servovakuum beaufschlagten Kolben (69, 70) verbunden ist.

3. Stellgerät nach Anspruch 2, dadurch gekennzeichnet, dass die Feder (67) eine Bimetallfeder ist, die die Luftklappe (8) nach dem Stillsetzen des auf eine vorgewählte Temperatur abgekühlten Motors (1) in die Schliessstellung bewegt.

4. Stellgerät nach einem der Ansprüche 1, 2 oder 3, dadurch gekennzeichnet, dass die schwenkbare Lagerung der Luftklappe (8) in bezug auf die Klappenfläche wenigstens zur Einleitung der Öffnungsbewegung der Luftklappe durch den Ladeluftdruck aussermittig angeordnet ist.

5. Stellgerät nach Anspruch 2, 3 oder 4, dadurch gekennzeichnet, dass wenigstens ein Kolben (69, 70) in einem von der Welle (27) quer durchdrungenen Zylindergehäuse (46) verschieblich angeordnet und über einen exzentrischen Ansatz (7, 74, 75, 86) am Kolben (69, 70) mit einem an der Welle drehfesten Kupplungskörper (68) gelenkig verbunden ist.

6. Stellgerät nach Anspruch 5, dadurch gekennzeichnet, dass der exzentrische Ansatz (73, 74, 75, 76) am Kolben (69, 70) fest angreift, dessen Umfangsfläche ballig ausgebildet ist und der in einer mittleren Kolbennut liegende Dichtungsring (71, 72) an seinem Innenumfang einen in zwei Dichtungslippen auslaufenden schwalbenschwanzförmigen Querschnitt aufweist, wobei die Dichtungslippen nach Art von Rückschlagkupplungen an axial gegenüberliegenden Nutenwänden elastisch anliegen.

7. Stellgerät nach einem der Ansprüche 2 bis 6, dadurch gekennzeichnet, dass der Kolbenraum (46″) zur einen Seite des Kolbens (69, 70) an den Ladeluftdruck oder an das Servovakuum angeschlossen ist, oder dass der Kolbenraum (46″) zur einen Seite des Kolbens (69, 70) mit dem Servovakuum und der Kolbenraum (46′) zur anderen Seite des Kolbens mit dem Ladeluftdruck in Verbindung steht.

8. Stellgerät nach Anspruch 7, dadurch gekennzeichnet, dass zwischen der Druckquelle (Servovakuum oder Ladeluftdruck) und dem von der Druckquelle beaufschlagten Kolbenraum (46″) eine Ventileinrichtung (101, 102, 102′, 102″, 105, 106, 106′) angeordnet ist, die mittels Federkraft die Verbindung zwischen der Druckquelle und dem Kolbenraum absperrt und entgegen der Federkraft entweder mechanisch vom in Öffnungsrichtung der Luftklappe (8) bewegten Kolben (70) oder pneumatisch vom Ladeluftdruck oder vom Unterdruck aus der Saugleitung (3, 107) in Öffnungsrichtung steuerbar ist.

9. Stellgerät nach Anspruch 8, dadurch gekennzeichnet, dass die Ventileinrichtung (101, 102) ein Stösselventil (101, 102; 103) in der Verbindung (100) zwischen dem Servovakuum und dem vom Servovakuum beaufschlagten Kolbenraum (46″) aufweist, wobei der Stössel (102) zur Betätigung des Ventils durch den in Öffnungsrichtung der Luftklappe bewegten Kolben (70) in den Kolbenraum hineinragt.

10. Stellgerät nach Anspruch 8, dadurch gekennzeichnet, dass die Ventileinrichtung (103, 105) ein Rückschlagventil (103) in der Verbindung (5′) zwischen dem Ladeluftdruck und dem vom Ladeluftdruck beaufschlagten Kolbenraum (46″) aufweist, wobei das Rückschlagventil vom Ladeluftdruck entgegen Federkraft in Öffnungsrichtung bewegbar ist.

11. Stellgerät nach Anspruch 9 oder 10, dadurch gekennzeichnet, dass dem Stösselventil (101, 102) bzw. dem Rückschlagventil (103) ein doppelsitziges Umschaltventil (105, 106) zugeordnet ist, das durch Federkraft in seiner ersten Ventilstellung gehalten ist, in der der von der Druckquelle (Ladeluftdruck oder Servovakuum) beaufschlagte Kolbenraum an Atmosphäre geschaltet ist, während die Verbindung der Druckquelle zum Kolbenraum abgesperrt ist, und das durch Unterdruck in der Saugleitung entgegen der Federkraft in seiner zweiten Ventilstellung gehalten ist, in der der Kolbenraum von der Atmosphäre abgeschaltet ist, während die Druckquelle an den Kolbenraum angeschlossen ist.

12. Stellgerät nach einem der Ansprüche 2 bis 11, dadurch gekennzeichnet, dass zwei gegenläufige Kolben (69, 70) vorhanden sind, deren exzentrische Ansätze (73–76) an zur Welle (27) radial gegenüberliegenden Punkten des Kupplungskörpers (68) gelenkig angreifen.

13. Stellgerät nach einem der Ansprüche 2 bis 12, dadurch gekennzeichnet, dass ein mit der Ladeluftleitung (5) verbundener, zylindrischer Rohrabschnitt (9) als Luftklappengehäuse mit dem Zylindergehäuse (10) eine Baueinheit bildet, das abseits von der Anströmseite der Luftklappe eine Öffnung für das Bypassventil (11) enthält, wobei eine seitliche zur Welle (27) zentrierte Öffnung (51) im Zylindergehäuse (10) von einem Deckel (53, 54) verschliessbar ist, der gleichzeitig als Lager für das eine Ende (36) der Welle dient, die durch eine Öffnung (42) in der Gehäusewandung (43) zwischen dem Zylindergehäuse (10) und dem Klappengehäuse (9) geführt ist und wobei das andere Ende (32) der Welle mit der Luftklappe (8) verbunden ist.

14. Stellgerät nach Anspruch 13, dadurch gekennzeichnet, dass das Zylindergehäuse (10) stirnseitig mit je einem Deckel (48, 49) verschliessbar ist und wenigstens ein Deckel (8) eine Gewindebohrung zum Durchtritt einer Einstellschraube (84) aufweist, deren in den Zylinderraum hineinragendes Ende als Hubbegrenzungsanschlag für die Kolben (69, 70) dient, und dass jeder Deckel wenigstens eine durch eine Luftfilterplatte (82, 83) verschlossene Öffnung (80, 81) enthält.

## Claims

1. Regulating device for an air flap in the intake manifold of an internal combustion engine charged by means of a pressure wave-turbo-charging device, which is in its shut-off position during the starting phase of the internal combustion engine, whereby the engine draws in the combustion air by means of a by-pass valve and whereby the opening movement of the air flap is initiated pneumatically directly at the end of the starting phase, and is brought into its closing position after the shut-down of the engine or of the charging device by means of spring force, characterised in that the air flap (8) is kept open during all the operating requirements of the charging device (4), whereby the manifold air pressure or a servo vacuum or both is used as the actuating medium for the regulating device, and the manifold air pressure or the sub-pressure from the suction line (3, 107) arranged upstream of the charging device (4) is used for controlling the actuation medium.

2. Regulating device according to claim 1, characterised in that for its pivotable mounting in the intake manifold (5), the air flap (8) is held firmly on a shaft (27) projecting from the intake manifold, onto which shaft at least one spring (67) engages for rotating the shaft into the closing position of the air flap, and which, for the opposite rotation of the shaft into the opening position of the air flap, is connected by means of lever gears (68, 73, 74, 75, 76) to at least one piston (69, 70) acted on by the manifold air pressure and/or the servo vacuum.

3. Regulating device according to claim 2, characterised in that the spring (67) is a bimetal spring which moves the air flap (8) into the closing position after the shut-down of the engine (1) cooled to a preselected temperature.

4. Regulating device according to one of claims 1, 2 or 3, characterised in that the rotatable mounting of the air flap (8) is arranged eccentrically with respect to the flap surface at least for the initiation of the opening movement of the air flap by the manifold pressure.

5. Regulating device according to claim 2, 3 or 4, characterised in that at least one piston (69, 70) is displaceably arranged in a cylinder housing (46) penetrated transversely by the shaft (27), and is flexibly connected by means of an eccentric attachment (7, 74, 75, 86) on the piston (69, 70) to a coupling body (68) fixedly secured to the shaft.

6. Regulating device according to claim 5, characterised in that the eccentric attachment (73, 74, 75, 76) engages firmly on the piston (69, 70), the circumferential surface of which is made to be spherical, and the sealing ring (71, 72) lying in a central piston groove has at its inner circumference a dovetail cross section ending in two sealing lips, wherein the sealing lips resiliently abut axially opposite groove walls like return couplings.

7. Regulating device according to one of claims 2 to 6, characterised in that the piston chamber (46'') is connected at one side of the piston (69, 70) to the manifold pressure or to the servo vacuum, or in that the piston chamber (46'') is connected at one side of the piston (69, 70) to the servo vacuum, and the piston chamber (46') is connected at the other side of the piston to the manifold pressure.

8. Regulating device according to claim 7, characterised in that between the pressure source (servo vacuum or manifold pressure) and the piston chamber (46'') acted on by the pressure source, there is arranged a valve device (101, 102, 102', 102'', 105, 106, 106') which blocks the connection between the pressure source and the piston chamber by means of spring force, and can be controlled against the spring force either mechanically by the piston (70) moving in the opening direction of the air flap (8) or pneumatically by the manifold pressure or by the sub-pressure from the suction line (3, 107) in the opening direction.

9. Regulating device according to claim 8, characterised in that the valve device (101, 102) has a poppet valve (101, 102; 103) in the connection between the servo vacuum and the piston chamber (46'') acted on by the servo vacuum, whereby the stem (102) projects into the piston chamber for actuation of the valve through the piston (70) moving in the opening direction of the air flap.

10. Regulating device according to claim 8, characterised in that the valve device (103, 105) has a return valve (103) in the connection (5') between the manifold pressure and the piston chamber (46'') acted on by the manifold pressure, whereby the return valve can be moved by the manifold pressure against spring force in the opening direction.

11. Regulating device according to claim 9 or 10, characterised in that associated with the poppet valve (101, 102) or the return valve (103) there is a double-seated change-over valve (105, 106) which is held by spring force in its first valve position, in which the piston chamber acted on by the pressure source (manifold pressure or servo vacuum) is connected to atmosphere, whilst the connection of the pressure source to the piston chamber is blocked, and which is held by sub-pressure in the suction line against the spring force in its second valve position, in which the piston chamber is disconnected from the atmosphere, whilst the pressure source is connected to the piston chamber.

12. Regulating device according to one of claims 2 to 11, characterised in that two opposed pistons (69, 70) are present whose eccentric attachments (73–76) engage flexibly at points of the coupling body (68) lying radially opposite the shaft (27).

13. Regulating device according to one of claims 2 to 12, characterised in that a cylindrical pipe section (9) as an air flap housing, connected to the intake manifold (5), forms a structural unit with the cylinder housing (10), which unit contains, remote from the oncoming flow side of the air flap, an aperture for the bypass valve (11), wherein an aperture (51) in the cylinder housing (10), centred laterally of the shaft (27) can be closed by a cover (53, 54), which at the same time is used as a bearing for the one end (36) of the shaft which is guided through an aperture (42) in the housing wall (43) between the cylinder housing (10, and wherein the other end (32) of the shaft is connected to the air flap (8).

14. Regulating device according to claim 13, characterised in that the cylinder housing (10) can be closed on the face with a cover (48, 49), and at least one cover (8) has a threaded bore for the passage of an adjustment screw (84), whose end projecting into the cylinder chamber is used as a stroke limiting device for the pistons (69, 70), and in that each cover contains at least one aperture (80, 81) sealed by an air filter plate (82, 83).

**Revendications**

1. Dispositif de réglage pour un volet d'air dans la conduite d'air de suralimentation d'un moteur à combustion interne alimenté à l'aide d'un suralimenteur à ondes de pression, qui se trouve, pendant la phase de démarrage du moteur à combustion interne, dans sa position de fermeture, le moteur aspirant l'air de combustion par l'intermédiaire d'un clapet de by-pass et le mouvement d'ouverture du volet d'air débutant directement et par voie pneumatique à la fin de la phase de démarrage alors qu'il est amené dans sa position de fermeture à l'aide de la force d'un ressort, après l'arrêt du moteur ou du suralimenteur, caractérisé par le fait que le volet d'air (8) est maintenu ouvert pendant toutes les conditions de fonctionnement du suralimenteur, le milieu de commande pour le dispositif de réglage étant la pression d'air de suralimentation ou un vide-servo, ou les deux, et la pression d'air de suralimentation ou la dépression qui règne dans la conduite d'aspiration (3, 107) disposée en amont du suralimenteur (4) servant au réglage du milieu de commande.

2. Dispositif de réglage selon la revendication 1, caractérisé par le fait que le volet d'air (8) est maintenu fixé, pour son montage basculant dans la conduite d'air de suralimentation (5), sur un arbre (27) sortant de la conduite d'air de suralimentation et attaqué, pour faire tourner l'arbre dans la position de fermeture du volet d'air, par au moins un ressort (67), alors que pour la rotation inverse de l'arbre dans la position qui correspond à la fermeture du volet d'air, ledit arbre est relié par l'intermédiaire d'une transmission à leviers (68, 73, 74, 75, 76), à au moins un piston (69, 70) chargé par la pression d'air de suralimentation et/ou par le vide-servo.

3. Dispositif de réglage selon la revendication 2, caractérisé par le fait que le ressort (67) est un bimétal qui déplace le volet d'air (8) dans la position de fermeture, après l'arrêt du moteur (1) qui a été refroidi à une température prédéterminée.

4. Dispositif de réglage selon l'une des revendications 1, 2 ou 3, caractérisé par le fait que le montage basculant du volet d'air (8) est agencé de façon excentrée par rapport à la surface du volet, au moins pour faire démarrer le mouvement d'ouverture du volet d'air sous l'effet de la pression de suralimentation.

5. Dispositif de réglage selon la revendication 2, 3 ou 4, caractérisé par le fait qu'au moins un piston (69, 70) est disposé de façon à pouvoir se déplacer dans un boîtier de cylindre (46) qui est traversé dans le sens transversal par l'arbre (26), et il est relié à articulation à un corps de couplage (68) solidaire en rotation de l'arbre, par l'intermédiaire d'un appendice excentré (7, 74, 75, 86) prévu sur le piston (69, 70).

6. Dispositif de réglage selon la revendication 5, caractérisé par le fait que l'appendice excentré (73, 74, 75, 76) attaque de façon ferme le piston (69, 70), dont la surface périphérique est bombée, et que la bague d'étanchéité (71, 72) qui se situe dans une gorge médiane du piston comporte, sur sa périphérie, une section transversale en queue d'aronde, se terminant par deux lèvres d'étanchéité, lesdites lèvres d'étanchéité portant, à la manière d'accouplements non réversibles, contre des parois de gorge qui sont situées axialement l'une en face de l'autre.

7. Dispositif de réglage selon l'une des revendications 2 à 6, caractérisé par le fait que la chambre de piston (46″) située sur un côté du piston (69, 70), est reliée à la pression de l'air de suralimentation ou au vide-servo, ou que la chambre de piston (46″) située sur un côté du piston (69, 70) est reliée au vide-servo, alors que la chambre de piston (46′) située de l'autre côté du piston, est reliée à la pression d'air de suralimentation.

8. Dispositif de réglage selon la revendication 7, caractérisé par le fait qu'entre la source de pression (vide-servo ou pression d'air de suralimentation) et la chambre de piston (46″) qui est chargée par la source de pression, est prévu un dispositif à soupape (101, 102, 102′, 102″, 105, 106, 106′) qui, à l'aide de la force d'un ressort, interrompt la liaison entre la source de pression et la chambre de piston, et qui, à l'encontre de la force du ressort, est susceptible d'être commandé dans le sens de l'ouverture, soit mécaniquement par le piston (70) déplacé dans le sens de l'ouverture du volet d'air (8) soit pneumatiquement par la pression d'air de suralimentation ou par la dépression provenant de la conduite d'aspiration (3, 107).

9. Dispositif de réglage selon la revendication 8, caractérisé par le fait que le dispositif à soupape (101, 102) comporte une soupape à poussoir (101, 102; 103) située dans la liaison (100) entre le vide-servo et la chambre de piston (46'') qui est chargée par le vide-servo, la réalisation étant telle que le poussoir (102) pénètre dans la chambre de piston en vue de la commande de la soupape par le piston (70) qui est déplacé dans le sens de l'ouverture du volet d'air.

10. Dispositif de réglage selon la revendication 8, caractérisé par le fait que le dispositif à soupape (103, 105) comporte une soupape de retenue (103) dans la liaison (5') entre la pression d'air de suralimentation et la chambre de piston (46'') qui est chargée par la pression d'air de suralimentation, la soupape de retenue étant susceptible d'être déplacée dans la direction de l'ouverture sous l'effet de la pression d'air de suralimentation, à l'encontre de la force du ressort.

11. Dispositif de réglage selon la revendication 9 ou 10, caractérisé par le fait qu'à la soupape à poussoir (101, 102) ou à la soupape de retenue (103) est associée une soupape de commutation à double siège (105, 106) qui est maintenue, par la force d'un ressort, dans sa première position de soupape, dans laquelle la chambre de piston qui est chargée par la source de pression (pression d'air de suralimentation ou vide-servo), est reliée à l'atmosphère, alors que la liaison entre la source de pression et la chambre de piston est interrompue, et qui, sous l'effet de la dépression qui règne dans la conduite d'aspiration et à l'encontre de la force du ressort, est maintenue dans sa seconde position de soupape dans laquelle la chambre de piston est isolée de l'atmosphère, alors que la source de pression est reliée à la chambre de piston.

12. Dispositif de réglage selon l'une des revendications 2 à 11, caractérisé par le fait que sont prévus deux pistons (69, 70) à mouvements opposés, et dont les appendices excentrés (73, 76) attaquent avec articulation des points radialement opposés du corps d'accouplement (68).

13. Dispositif de réglage selon l'une des revendications 2 à 12, caractérisé par le fait qu'une section tubulaire cylindrique, reliée à la conduite d'air de suralimentation (5) constitue, en tant que boîtier de volet d'air, avec le boîtier de cylindre (10), une unité de construction qui comporte à l'écart du côté d'alimentation du volet d'air, une ouverture pour la soupape de by-pass (11), la réalisation étant telle qu'une ouverture (51) qui est centrée latéralement par rapport à l'arbre (27) et qui est ménagée dans le boîtier de cylindre (10), est susceptible d'être fermée par un couvercle (53, 54) qui sert, en même temps, de palier pour une extrémité (36) de l'arbre qui est guidée dans une ouverture (42) ménagée dans la paroi du boîtier (43), entre le boîtier de cylindre (10) et le boîtier du volet (9), l'autre extrémité (32) de l'arbre étant reliée au volet d'air (8).

14. Dispositif de réglage selon la revendication 13, caractérisé par le fait que le boîtier de cylindre (10) est susceptible d'être obturé, sur les côtés frontaux, par respectivement un couvercle (48, 49), alors qu'au moins un couvercle (8) comporte un perçage fileté pour le passage d'une vis de réglage (84) dont l'extrémité, qui pénètre dans la chambre du cylindre, sert de butée de limitation de la course pour les pistons (69, 70), et que chaque couvercle comporte au moins une ouverture (80, 81) qui est fermée par une plaque de filtre à air (82, 83).

# Fig. 1

Fig. 2

Fig. 3

0 020 791

Fig. 4

Fig. 5

Fig. 6

Fig. 7

Fig. 8

Fig. 9